# EUROPÄISCHE PATENTSCHRIFT

(11) **EP 3 269 123 B1**
(45) Veröffentlichungstag und Bekanntmachung des Hinweises auf die Patenterteilung: **19.01.2022**
(21) Anmeldenummer: 16702391.0
(22) Anmeldetag: 28.01.2016
(51) Int. Cl.: H04L 29/08, H04W 4/44, G06F 8/65, H04L 12/24, H04W 8/22, H04W 8/24, G06F 9/445

(54) **VERFAHREN ZUM BETREIBEN EINES SERVERS**
PROCEDURE FOR OPERATING A SERVER
PROCÉDURE DE FONCTIONNEMENT D'UN SERVEUR

(30) Priorität: 11.03.2015 DE 102015204363
(43) Veröffentlichungstag der Anmeldung: 17.01.2018
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2016/051786
(87) Internationale Veröffentlichungsnummer: WO 2016/142100

(56) Entgegenhaltungen:
- DE-A1-102009 045 711
- US-A1- 2011 241 862
- US-A1- 2011 307 336
- US-A1- 2012 030 470
- US-A1- 2014 032 048
- US-B1- 8 645 014

## Beschreibung

Die Erfindung betrifft ein Verfahren zum Betreiben eines Servers. Die Erfindung betrifft ferner einen Server sowie ein Computerprogramm.

### Stand der Technik

Die Offenlegungsschrift US 2012/030470 A1 zeigt ein System und ein Verfahren zum Programmieren eines Fahrzeugmoduls über eine sichere lokale drahtlose Kommunikationsverbindung.

Fahrzeuginspektionen mit einer detaillierten Fehleranalyse und einer Behebung durch Softwareupdates werden in der Regel in regelmäßigen Abständen, zum Beispiel in Zweijahresabständen und/oder in Abständen von 20.000 Kilometern, in Werkstätten durchgeführt. Die Analyse wird dabei durch eine Kabelverbindung über einen OBD (On Board Diagnose)-Stecker durchgeführt, über den größere Datenmengen transferiert werden können.

Bei größeren Problemen werden außerhalb der Inspektionen durch die Hersteller üblicherweise Rückrufe für die Fahrzeuge gestartet.

Bei kleineren und/oder nicht kritischen von den Herstellern und/oder OEM (Original Equipment Manufacturer, Originalausrüstungshersteller) bekannten Fehlern werden vermehrt Softwareupdates über eine Mobilfunkverbindung zum Fahrzeug zur Behebung eingespielt. Es kann bei solchen Mobilfunkverbindungen zum Fahrzeug zu Kommunikationsabbrüchen kommen, wenn eine Abdeckung des Mobilfunknetzes Funklöcher aufweist oder wenn zum Beispiel das Fahrzeug in eine Tiefgarage fährt. Eine Aktualisierung einer Software auf dem Fahrzeug kann somit fehlschlagen.

### Offenbarung der Erfindung

Die der Erfindung zugrunde liegende Aufgabe kann daher darin gesehen werden, ein effizientes Konzept bereitzustellen, welches es ermöglicht, dass eine Software, die auf einer Verarbeitungseinrichtung eines Fahrzeugs gespeichert ist, zuverlässig aktualisiert werden kann.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Servers bereitgestellt, umfassend die folgenden Schritte:
- Aufbauen einer Kommunikationsverbindung zwischen dem Server und einem sich auf einem Parkplatz befindenden Fahrzeug über ein Kommunikationsnetzwerk, wobei das Kommunikationsnetzwerk mittels einer Kommunikationsinfrastruktur des Parkplatzes gebildet ist,
- Überprüfen über die Kommunikationsverbindung, ob eine auf einer Verarbeitungseinrichtung des Fahrzeugs gespeicherte Software aktualisiert werden muss,
- abhängig von dem Überprüfen Senden von Aktualisierungsdaten zum Aktualisieren der Software über die Kommunikationsverbindung an das Fahrzeug mittels des Servers, so dass die Software basierend auf den Aktualisierungsdaten aktualisiert werden kann, während sich das Fahrzeug auf dem Parkplatz befindet,
- wobei das Überprüfen umfasst, ob die Verarbeitungseinrichtung eine Fehlfunktion aufweist und wenn ja, ob eine Aktualisierung der Software ausreicht, um die Fehlfunktion zu beheben, oder
- wobei das Überprüfen umfasst, ob die Verarbeitungseinrichtung eine Fehlfunktion hatte und wenn ja, ob eine Aktualisierung der Software ausreicht, um die Fehlfunktion zu beheben, oder
- wobei das Überprüfen umfasst, ob die Verarbeitungseinrichtung eine Fehlfunktion aufweist und ob die Verarbeitungseinrichtung eine Fehlfunktion hatte und wenn ja, ob eine Aktualisierung der Software ausreicht, um die Fehlfunktion zu beheben,
- wobei der Server die Aktualisierungsdaten nur während eines Stillstandes des Fahrzeugs an das Fahrzeug sendet.

Gemäß einem weiteren Aspekt wird ein Server bereitgestellt, umfassend:
- eine Kommunikationsschnittstelle, die ausgebildet ist, über ein Kommunikationsnetzwerk zu kommunizieren, das mittels einer Kommunikationsinfrastruktur eines Parkplatzes gebildet ist,
- einen Prozessor, der ausgebildet ist, die Kommunikationsschnittstelle derart zu steuern,
- dass die Kommunikationsschnittstelle eine Kommunikationsverbindung zwischen dem Server und dem sich auf einem Parkplatz befindenden Fahrzeug über das Kommunikationsnetzwerk aufbaut,
- so dass über die Kommunikationsverbindung überprüft werden kann, ob eine auf einer Verarbeitungseinrichtung des Fahrzeugs gespeicherte Software aktualisiert werden muss,
- wobei der Prozessor ausgebildet ist, die Kommunikationsschnittstelle abhängig von dem Überprüfen derart zu steuern, dass die Kommunikationsschnittstelle Aktualisierungsdaten zum Aktualisieren der Software über die Kommunikationsverbindung an das Fahrzeug sendet, so dass die Software basierend auf den Aktualisierungsdaten aktualisiert werden kann, während sich das Fahrzeug auf dem Parkplatz befindet,
- wobei das Überprüfen umfasst, ob die Verarbeitungseinrichtung eine Fehlfunktion aufweist und wenn ja, ob eine Aktualisierung der Software ausreicht, um die Fehlfunktion zu beheben, oder
- wobei das Überprüfen umfasst, ob die Verarbeitungseinrichtung eine Fehlfunktion hatte und wenn ja, ob eine Aktualisierung der Software ausreicht, um die Fehlfunktion zu beheben, oder
- wobei das Überprüfen umfasst, ob die Verarbeitungseinrichtung eine Fehlfunktion aufweist und ob die Verarbeitungseinrichtung eine Fehlfunktion hatte und wenn ja, ob eine Aktualisierung der Software ausreicht, um die Fehlfunktion zu beheben,
- wobei der Prozessor ausgebildet ist, die Kommunikationsschnittstelle derart zu steuern, dass die Kommunikationsschnittstelle die Aktualisierungsdaten nur während eines Stillstandes des Fahrzeugs an das Fahrzeug sendet.

Gemäß einem weiteren Aspekt wird ein Parksystem für Fahrzeuge bereitgestellt, umfassend:
- einen Parkplatz,
- der eine Kommunikationsinfrastruktur aufweist,
- die ausgebildet ist, ein Kommunikationsnetzwerk zu bilden, und
- den erfindungsgemäßen Server.

Nach einem anderen Aspekt wird ein Computerprogramm bereitgestellt, welches Programmcode zur Durchführung des Verfahrens zum Betreiben eines Servers umfasst, wenn das Computerprogramm auf einem Computer, insbesondere auf dem Server, ausgeführt wird.

Die Erfindung umfasst also insbesondere und unter anderem den Gedanken, ein Kommunikationsnetzwerk eines Parkplatzes zu verwenden, um eine Kommunikationsverbindung zum Fahrzeug aufzubauen. Hierüber kann dann in vorteilhafter Weise überprüft werden, ob eine auf einer Verarbeitungseinrichtung des Fahrzeugs gespeicherte Software aktualisiert werden muss. Erfindungsgemäß ist weiter vorgesehen, dass über diese Kommunikationsverbindung Aktualisierungsdaten an das Fahrzeug gesendet werden, wenn das Überprüfen ergeben hat, dass die Software aktualisiert werden muss. Hierbei befindet sich das Fahrzeug auf dem Parkplatz. Das heißt also, dass erfindungsgemäß vorgesehen ist, dass sich das Fahrzeug in einer definierten Kommunikationsumgebung befindet, innerhalb welcher mit dem Fahrzeug kommuniziert wird und gegebenenfalls eine Softwareaktualisierung durchgeführt wird. Es wird also in vorteilhafter Weise das Kommunikationsnetzwerk, das mittels der Kommunikationsinfrastruktur des Parkplatzes gebildet ist, für die Kommunikationsverbindung verwendet. Ein solches Kommunikationsnetzwerk weist in der Regel eine zuverlässigere Funkabdeckung innerhalb des Parkplatzes auf, als übliche Mobilfunknetzwerke. Denn in der Regel ist die Kommunikationsinfrastruktur auf eine Topografie des Parkplatzes angepasst, so dass eine für eine zuverlässige Kommunikationsverbindung zum Fahrzeug ausreichende Funkabdeckung erreicht werden kann. Selbst wenn das Kommunikationsnetzwerk innerhalb des Parkplatzes Funklöcher aufweisen sollte, so können diese leicht vermessen werden, um diesen Umstand beim Kommunizieren mit dem Fahrzeug zu berücksichtigen. Dies ist in der Regel auf einem Parkplatz einfacher durchführbar im Vergleich zu einem Mobilfunknetzwerk, welches außerhalb des Parkplatzes gebildet oder aufgebaut ist. Denn außerhalb des Parkplatzes gibt es üblicherweise eine Vielzahl von unbekannten Parametern, die eine Funkabdeckung des Mobilfunknetzwerks beeinflussen können.

Es kann durch die Kommunikationsinfrastruktur des Parkplatzes somit in vorteilhafter Weise eine robustere und zuverlässigere Kommunikationsverbindung zwischen dem Server und dem Fahrzeug hergestellt werden im Vergleich zu üblichen Mobilfunkverbindungen außerhalb des Parkplatzes. Insofern ist dann dadurch in vorteilhafter Weise eine sicherere und zuverlässigere Übermittlung der Aktualisierungsdaten an das Fahrzeug ermöglicht. Somit kann also in vorteilhafter Weise eine Aktualisierung der Software sicherer und robuster durchgeführt werden.

Software umfasst zum Beispiel ein Programm oder eine Menge von Programmen, die dazu dienen, einen Computer, insbesondere die Verarbeitungseinrichtung, zu betreiben.

Software umfasst zum Beispiel ein oder mehrere Programme sowie eine zugehörige Dokumentation.

Software umfasst zum Beispiel einen oder mehrere Programme und beispielsweise eine zugehörige Dokumentation und zum Beispiel weitere Daten, die (Programme und/oder Dokumentation und/oder Daten) zum Betrieb eines Computers notwendig sind.

In einer Ausführungsform wird das Überprüfen mittels des Servers durchgeführt. Dadurch kann effizient überprüft werden, ob eine Aktualisierung vorgenommen werden muss oder nicht.

Nach einer Ausführungsform ist vorgesehen der Server die Aktualisierungsdaten nur während eines Stillstandes des Fahrzeugs an das Fahrzeug sendet. Dadurch wird insbesondere der technische Vorteil bewirkt, dass eine Kommunikationsverbindung zwischen dem Server und dem Fahrzeug besonders robust ist. Insbesondere wird dadurch in vorteilhafter Weise bewirkt, dass die Kommunikationsverbindung besonders stabil ist. Insbesondere kann dadurch in vorteilhafter Weise bewirkt werden, dass eine Datenrate in etwa konstant bleibt. Denn dadurch, dass das Fahrzeug stillsteht, während die Aktualisierungsdaten an das Fahrzeug gesendet werden, kann es nicht zu einer Situation kommen, in welcher das Fahrzeug zum Beispiel an einer Säule vorbeifährt, die Funkwellen des Kommunikationsnetzwerks zumindest teilweise abschattet.

Der Stillstand des Fahrzeugs umfasst insbesondere, dass das Fahrzeug abgestellt ist, insbesondere an einer Parkposition abgestellt ist. Das heißt also insbesondere, dass nach einer Ausführungsform vorgesehen ist, dass der Server die Aktualisierungsdaten nur dann an das Fahrzeug sendet, wenn dieses auf einer Parkposition abgestellt ist.

Nach einer Ausführungsform ist vorgesehen, dass das Fahrzeug einen autonomen Parkvorgang durchführt, während es sich auf dem Parkplatz befindet. Der autonome Parkvorgang umfasst insbesondere, dass das Fahrzeug auf einer Parkposition parkt, also ein Parken des Fahrzeugs auf einer Parkposition. Bei einem solch autonomen Parkvorgang wird ein Fahrzeug in der Regel von seinem Fahrer an einer Abgabeposition abgestellt. Von einer solchen Abgabeposition fährt das Fahrzeug autonom oder ferngesteuert in eine Parkposition des Parkplatzes und parkt dort. Nach einem Ende einer Parkzeitdauer oder nach Anforderung seitens des Fahrers oder des Parkplatzbetreibers, fährt das Fahrzeug autonom oder ferngesteuert von der Parkposition zu einer Abholposition, an welcher der Fahrer sein Fahrzeug abholen kann. Die Abholposition kann insbesondere identisch zur Abgabeposition sein. Ein solch autonomes Parken kann auch als AVP bezeichnet werden, auf englisch "automatic valet parking" und kann mit "automatischer Parkvorgang" übersetzt werden. Ein solch autonom fahrendes Fahrzeug, das automatisch ein- und ausparken kann, wird beispielsweise als ein AVP-Fahrzeug bezeichnet.

Das heißt also insbesondere, dass nach einer Ausführungsform das Fahrzeug ein AVP-Fahrzeug ist. Ein AVP-Fahrzeug weist also insbesondere eine autonome Parkfunktionalität auf.

Autonom im Sinne der vorliegenden Erfindung bedeutet insbesondere, dass das Fahrzeug selbstständig, also ohne einen Eingriff eines Fahrers, auf dem Parkplatz navigiert oder fährt. Das Fahrzeug fährt also selbstständig auf dem Parkplatz, ohne dass ein Fahrer hierfür das Fahrzeug steuern müsste.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Nach einer Ausführungsform ist vorgesehen, dass eine weitere Kommunikationsverbindung zwischen dem Server und einem weiteren Server aufgebaut wird, wobei der Server die Aktualisierungsdaten von dem weiteren Server über die weitere Kommunikationsverbindung empfängt, um die Aktualisierungsdaten über die Kommunikationsverbindung an das Fahrzeug zu senden. Dadurch wird insbesondere der technische Vorteil bewirkt, dass der Server selbst nicht die Aktualisierungsdaten gespeichert haben muss. Diese liegen auf dem weiteren Server respektive der weitere Server kann auf diese Aktualisierungsdaten zugreifen. Dadurch kann der Server selbst effizient und mit einem verringerten Speicherbedarf betrieben werden.

Der weitere Server ist nach einer Ausführungsform ein Server eines OEMs, also eines Originalausrüstungsherstellers (Original Equipment Manufacturer). Insbesondere handelt es sich bei dem weiteren Server um einen Server eines OEM-Inspektionsproviders. Ein solcher Provider führt zum Beispiel online, also über die Kommunikationsverbindungen eine Inspektion des Fahrzeugs, also insbesondere von Fahrzeugsystemen, durch.

Nach einer Ausführungsform ist vorgesehen, dass eine weitere Kommunikationsverbindung zwischen dem Server und einem weiteren Server aufgebaut wird.

Nach einer Ausführungsform ist vorgesehen, dass eine weitere Kommunikationsverbindung zwischen dem Server und einem weiteren Server aufgebaut wird, wobei das Überprüfen mittels des weiteren Servers durchgeführt wird.

Der weitere Server kann also insbesondere über die weitere Kommunikationsverbindung und über die Kommunikationsverbindung auf das Fahrzeug entfernt zugreifen, um zum Beispiel eine Fehleranalyse der Verarbeitungseinrichtung durchzuführen und/oder um zum Beispiel Aktualisierungsdaten aufzuspielen.

Nach einer Ausführungsform ist vorgesehen, dass der Server die Aktualisierungsdaten selbst bereitstellt. Das heißt also, dass auf dem Server die Aktualisierungsdaten gespeichert sind oder dass eine Datenbank vorgesehen ist, auf welcher der Server zugreifen kann, wobei in der Datenbank die Aktualisierungsdaten gespeichert sind.

Nach einer Ausführungsform ist vorgesehen, dass das Überprüfen umfasst, ob die Verarbeitungseinrichtung eine Fehlfunktion aufweist und/oder ob die Verarbeitungseinrichtung eine Fehlfunktion hatte und wenn ja, ob eine Aktualisierung der Software ausreicht, um die Fehlfunktion zu beheben. Dadurch wird insbesondere der technische Vorteil bewirkt, dass eine Fehlfunktion effizient erkannt werden kann. Insbesondere kann dadurch der technische Vorteil bewirkt werden, dass effizient erkannt werden kann, ob die Aktualisierung der Software ausreicht, um die Fehlfunktion zu beheben. Durch eine solche Erkenntnis kann in vorteilhafter Weise ein sicherer Betrieb des Fahrzeugs ermöglicht werden.

In einer Ausführungsform ist vorgesehen, dass, wenn die Aktualisierung der Software nicht ausreicht, um die Fehlfunktion zu beheben, zumindest eine der folgenden Aktionen mittels des Servers durchgeführt wird:
- Senden einer Nachricht an einen Halter und/oder an einen Fahrer des Fahrzeugs, um diese(n) darüber zu informieren,
- Senden einer Nachricht an eine Werkstatt eines Halters und/oder eines Fahrers des Fahrzeugs, um diese darüber zu informieren,
- Blockieren und/oder Einschränken zumindest einer die Fehlfunktion betreffende Fahrfunktion des Fahrzeugs,
- Senden einer Nachricht an einen Pannenservice, um diesen mit einer Reparatur der Fehlfunktion zu beauftragen,
- Senden einer Nachricht an einen Abholservice, um diesen mit einer Abholung des Fahrzeugs zu beauftragen.

Das Senden kann zum Beispiel über das Kommunikationsnetzwerk und/oder über ein weiteres Kommunikationsnetzwerk durchgeführt werden.

Durch das Senden der Nachricht an den Halter und/oder an den Fahrer des Fahrzeugs, um diesen darüber zu informieren, wird insbesondere der technische Vorteil bewirkt, dass diese Kenntnis darüber erlangen können, dass die Aktualisierung der Software nicht ausreicht, um die Fehlfunktion zu beheben.

Das Senden der Nachricht an die Werkstatt, um diese darüber zu informieren, weist insbesondere den technischen Vorteil auf, dass die Werkstatt Kenntnis darüber erlangt, dass die Aktualisierung der Software nicht ausreicht, um die Fehlfunktion zu beheben. Entsprechend kann dann die Werkstatt in vorteilhafter Weise vorbereitende Maßnahmen treffen, um die Fehlfunktion dann zu beheben, wenn das Fahrzeug vor Ort in der Werkstatt ist.

Das Blockieren und/oder Einschränken der die Fehlfunktion betreffende Fahrfunktion des Fahrzeugs weist insbesondere den technischen Vorteil auf, dass dadurch ein sicherer Betrieb des Fahrzeugs ermöglicht werden kann. Denn dadurch kann in vorteilhafter Weise vermieden werden, dass die Fehlfunktion erneut auftritt respektive sollte diese auftreten, dass es aufgrund der Einschränkung zu einer weniger kritischen Auswirkung kommt.

Das Senden der Nachricht an den Pannenservice weist insbesondere den technischen Vorteil auf, dass dieser noch vor Ort, also wenn sich das Fahrzeug auf dem Parkplatz befindet, die Fehlfunktion reparieren kann. Somit muss zum Beispiel ein Fahrer des Fahrzeugs nicht noch einmal zur Werkstatt zwecks Reparatur fahren.

Das Senden der Nachricht an den Abholservice weist insbesondere den technischen Vorteil auf, dass sich der Fahrer selbst darum nicht kümmern muss. Er spart somit Zeit.

In einer anderen Ausführungsform ist vorgesehen, dass, wenn die Aktualisierung der Software ausreicht, eine Nachricht an einen Halter und/oder an einen Fahrer des Fahrzeugs mittels des Servers gesendet wird, um diese(n) darüber zu informieren und/oder um von diesem respektive diesen eine Bestätigung für ein Durchführen der Aktualisierung respektive für die Beauftragung des Pannenservices respektive des Abholservices anzufordern. Dadurch wird insbesondere der technische Vorteil bewirkt, dass der Halter und/oder der Fahrer explizit bestätigen muss, wenn die Software aktualisiert werden soll respektive wenn der Pannenservice oder der Abholservice entsprechend beauftragt werden sollen. Insbesondere ist dann vorgesehen, dass erst ansprechend auf eine Bestätigung seitens des Halters und/oder seitens des Fahrers die Software aktualisiert wird respektive der Pannenservice oder der Abholservice beauftragt wird.

In einer anderen Ausführungsform ist vorgesehen, dass die Fehlfunktion eine autonome Fahrfunktionalität, insbesondere eine autonome Parkfunktionalität, betrifft. Dadurch wird insbesondere der technische Vorteil bewirkt, dass erkannt werden kann, ob eine autonome Fahrfunktionalität, insbesondere eine autonome Parkfunktionalität, fehlerfrei oder fehlerhaft arbeitet.

Nach einer Ausführungsform ist vorgesehen, dass der Server ausgebildet oder eingerichtet ist, das Verfahren zum Betreiben eines Servers aus- oder durchzuführen.

Nach einer Ausführungsform ist vorgesehen, dass der Server gemäß dem Verfahren zum Betreiben eines Servers der erfindungsgemäße Server ist.

Nach einer Ausführungsform ist vorgesehen, dass eine Kommunikation über das Kommunikationsnetzwerk verschlüsselt ist respektive wird.

Nach einer Ausführungsform umfasst das Kommunikationsnetzwerk ein Mobilfunk- und/oder ein WLAN-Kommunikationsnetzwerk. Insbesondere ein WLAN-Kommunikationsnetzwerk kann in vorteilhafter Weise eine besonders robuste, stabile und breitbandige Kommunikationsverbindung bereitstellen.

Die Kommunikationsinfrastruktur umfasst nach einer Ausführungsform einen oder mehrere Access Points (drahtloser Zugangspunkt, Basisstation). Das heißt also, dass zum Beispiel mehrere WLAN-Basisstationen und/oder mehrere Mobilfunkbasisstationen, zum Beispiel LTE-Basisstationen (LTE: Long Term Evolution), auf dem Parkplatz angeordnet sind.

Vorrichtungsmerkmale ergeben sich analog aus entsprechenden Verfahrensmerkmalen und umgekehrt. Das heißt also, dass sich technische Funktionalitäten betreffend das Verfahren aus entsprechenden Funktionalitäten betreffend die Vorrichtung und umgekehrt ergeben.

Das heißt also insbesondere, dass nach einer Ausführungsform vorgesehen ist, dass der Prozessor ausgebildet ist, die technischen Verfahrensschritte gemäß dem Verfahren derart durchzuführen, dass er die Kommunikationsschnittstelle entsprechend steuert.

So ist also nach einer Ausführungsform vorgesehen, dass der Prozessor ausgebildet ist, die vorstehend genannten Nachrichten zu ermitteln oder erzeugen, wobei dann die Kommunikationsschnittstelle insbesondere ausgebildet ist, diese Nachrichten oder eine der Nachrichten über das Kommunikationsnetzwerk zum Beispiel an den Pannenservice und/oder zum Beispiel an den Abholservice und/oder zum Beispiel an die Werkstatt und/oder zum Beispiel an den Halter und/oder an den Fahrer zu senden.

Entsprechend ist dann nach einer Ausführungsform vorgesehen, dass die Kommunikationsschnittstelle entsprechend ausgebildet ist, eine Bestätigung zu empfangen.

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Servers,
- Fig. 2: einen Server und
- Fig. 3: ein Parksystem für Fahrzeuge.

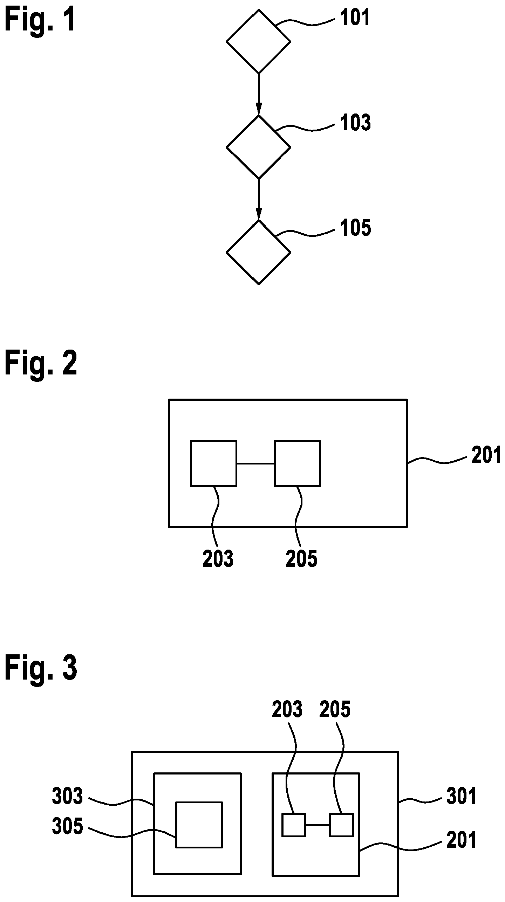

Fig. 1 zeigt ein Ablaufdiagramm eines Verfahrens zum Betreiben eines Servers.

Das Verfahren umfasst die folgenden Schritte:
- Aufbauen 101 einer Kommunikationsverbindung zwischen dem Server und einem sich auf einem Parkplatz befindenden Fahrzeug über ein Kommunikationsnetzwerk, wobei das Kommunikationsnetzwerk mittels einer Kommunikationsinfrastruktur des Parkplatzes gebildet ist,
- Überprüfen 103 über die Kommunikationsverbindung, ob eine auf einer Verarbeitungseinrichtung des Fahrzeugs gespeicherte Software aktualisiert werden muss,
- abhängig von dem Überprüfen Senden 105 von Aktualisierungsdaten zum Aktualisieren der Software über die Kommunikationsverbindung an das Fahrzeug mittels des Servers, so dass die Software basierend auf den Aktualisierungsdaten aktualisiert werden kann, während sich das Fahrzeug auf dem Parkplatz befindet.

Nach einer Ausführungsform ist vorgesehen, dass das Überprüfen mittels des Servers durchgeführt wird.

Nach einer anderen Ausführungsform ist vorgesehen, dass eine weitere Kommunikationsverbindung zwischen dem Server und einem weiteren Server aufgebaut wird, wobei der Server die Aktualisierungsdaten von dem weiteren Server über die weitere Kommunikationsverbindung empfängt, um die Aktualisierungsdaten über die Kommunikationsverbindung an das Fahrzeug zu senden.

Nach einer Ausführungsform ist vorgesehen, dass der weitere Server das Überprüfen durchführt.

Fig. 2 zeigt einen beispielhaften Server 201.

Der Server 201 umfasst:
- eine Kommunikationsschnittstelle 203, die ausgebildet ist, über ein Kommunikationsnetzwerk zu kommunizieren, das mittels einer Kommunikationsinfrastruktur eines Parkplatzes gebildet ist,
- einen Prozessor 205, der ausgebildet ist, die Kommunikationsschnittstelle 203 derart zu steuern,
- dass die Kommunikationsschnittstelle 203 eine Kommunikationsverbindung zwischen dem Server 201 und dem sich auf einem Parkplatz befindenden Fahrzeug über das Kommunikationsnetzwerk aufbaut,
- so dass über die Kommunikationsverbindung überprüft werden kann, ob eine auf einer Verarbeitungseinrichtung des Fahrzeugs gespeicherte Software aktualisiert werden muss,
- wobei der Prozessor 205 ausgebildet ist, die Kommunikationsschnittstelle 203 abhängig von dem Überprüfen derart zu steuern, dass die Kommunikationsschnittstelle 203 Aktualisierungsdaten zum Aktualisieren der Software über die Kommunikationsverbindung an das Fahrzeug sendet, so dass die Software basierend auf den Aktualisierungsdaten aktualisiert werden kann, während sich das Fahrzeug auf dem Parkplatz befindet.

Nach einer Ausführungsform ist vorgesehen, dass der Server 201 gemäß des Gegenstands des beigefügten Vorrichtungsanspruchs 6 ausgebildet oder eingerichtet ist, das Verfahren zum Betreiben eines Servers gemäß der beigefügten Verfahrensansprüche 1-7 aus-oder durchzuführen.

Fig. 3 zeigt ein Parksystem 301 für Fahrzeuge.

Das Parksystem 301 umfasst:
- einen Parkplatz 303,
- der eine Kommunikationsinfrastruktur 305 aufweist,
- die ausgebildet ist, ein Kommunikationsnetzwerk zu bilden, und
- den Server 201 gemäß Fig. 2.

Die Erfindung umfasst also insbesondere und unter anderem den Gedanken, ein technisches und effizientes Konzept bereitzustellen, welches eine regelmäßige Inspektionsanalyse inklusive einer gegebenenfalls notwendigen Einspielung von Softwareupdates (Softwareaktualisierungen) ermöglicht. Die Regelmäßigkeit kann dabei bis zu mehrmals täglich bedeuten. Dies insbesondere jedes Mal bei einem AVP-Parkvorgang.

Die Analyse und das Aufspielen von gegebenenfalls notwendigen Softwareaktualisierungen sind insbesondere über eine WLAN-Kommunikationsverbindung vorgesehen, die in vorteilhafter Weise eine robuste, stabile und breitbandige Kommunikationsverbindung ist.

Das Überprüfen und das gegebenenfalls notwendige Senden von Aktualisierungsdaten wird nur bei Stillstand des Fahrzeugs, z.B. während des Parkvorgangs, insbesondere während des autonomen Parkvorgangs durchgeführt, d.h. nur dann, wenn das Fahrzeug abgestellt ist oder stillsteht.

Dadurch wird sichergestellt, dass das Einspielen von Software, also insbesondere der Aktualisierungsdaten, nicht gefährdet wird aufgrund eines Abbrechens der Kommunikationsverbindung.

Der Server ist nach einer Ausführungsform von einem Parkplatzmanagementsystem oder Parkplatzverwaltungssystem umfasst. Ein solches Parkplatzmanagementsystem verwaltet insbesondere den Parkplatz, betreibt also den Parkplatz und koordiniert zum Beispiel die AVP-Vorgänge von AVP-Fahrzeugen.

Nach einer Ausführungsform übernimmt der Server, insbesondere das Parkplatzmanagementsystem, die Funktionalität eines OEM-Inspektionsproviders. Das heißt also, dass gemäß dieser Ausführungsform der Server sowohl das Überprüfen als auch das Senden von Aktualisierungsdaten durchführt. Nach einer anderen Ausführungsform ist der Server, insbesondere das Parkplatzmanagementsystem, mit einem OEM-Inspektionsprovider verbunden (vgl. Ausführungsformen betreffend den weiteren Server und die weitere Kommunikationsverbindung), wobei dieser OEM-Inspektionsprovider das Überprüfen durchführt und an den Server die Aktualisierungsdaten sendet, so dass dieser dann die empfangenen Aktualisierungsdaten an das Fahrzeug weiterleiten kann.

Nach einer Ausführungsform ist der Server, insbesondere das Parkplatzmanagementsystem, mit allen und/oder verschiedenen und/oder mehreren OEMs verbunden.

Dadurch wird insbesondere sichergestellt, dass immer die neuesten Inspektionsanalysen und Softwareupdates, also Softwareaktualisierungen, zur Verfügung stehen.

Nach einer weiteren Ausführungsform ist vorgesehen, dass speziell die für einen AVP-Vorgang notwendigen Komponenten und/oder Funktionen analysiert und gegebenenfalls aktualisiert werden.

Werden bei einer Analyse Fehler und/oder notwendige Softwareaktualisierungen festgestellt, dann ist vorzugsweise vorgesehen, dass die Aktualisierungsdaten an das Fahrzeug gesendet werden. Das heißt also, dass vorzugsweise die Softwareupdates aufgespielt werden.

In dem Fall, in welchem die Softwareupdates nicht ausreichen, um die gefundenen Fehler zu beheben, werden zumindest eine oder mehrere der folgenden Aktionen ausgelöst oder durchgeführt:
- Informationen des Halters/Fahrers (sofort oder bei Abholung des Fahrzeugs) über den Fehler (zum Beispiel wird eine Nachricht an ein mobiles Endgerät des Halters / des Fahrers gesendet),
- Information an die "Standard"-Werkstatt des Halters/Fahrers (wobei die Information die Information über den Fehler umfasst), so dass diese einen Termin mit dem Fahrer / dem Halter vereinbaren kann und gegebenenfalls notwendige Materialien besorgen kann.
- Gegebenenfalls "Blockierung" und/oder Einschränkung des Fahrzeugs in Bezug auf die Fahreigenschaften, wenn ein schwerwiegender Fehler vorliegt.
- Beauftragung eines sofortigen Services vor Ort (vorzugsweise in Rücksprache mit dem Halter).
- Beauftragung eines Abholservices (zum Beispiel, um das Fahrzeug in eine Werkstatt zu überführen).

In dem Fall, dass die Softwareupdates ausreichen, wird nach einer Ausführungsform mindestens der Halter/Fahrer informiert. Nach einer Ausführungsform wird im Vorfeld (also vor eine Aktualisierung, insbesondere vor einem Senden der Aktualisierungsdaten) eine Erlaubnis/ein Auftrag für diesen Service von dem Fahrer/Halter eingeholt.

Update und Aktualisierung im Sinne der vorliegenden Erfindung können allgemein synonym verwendet werden.

## Patentansprüche

1. Verfahren zum Betreiben eines Servers (201), umfassend die folgenden Schritte:
- Aufbauen (101) einer Kommunikationsverbindung zwischen dem Server (201) und einem sich auf einem Parkplatz (303) befindenden Fahrzeug über ein Kommunikationsnetzwerk, wobei das Kommunikationsnetzwerk mittels einer Kommunikationsinfrastruktur (305) des Parkplatzes (303) gebildet ist,
- Überprüfen (103) über die Kommunikationsverbindung, ob eine auf einer Verarbeitungseinrichtung des Fahrzeugs gespeicherte Software aktualisiert werden muss,
- abhängig von dem Überprüfen Senden (105) von Aktualisierungsdaten zum Aktualisieren der Software über die Kommunikationsverbindung an das Fahrzeug mittels des Servers (201), so dass die Software basierend auf den Aktualisierungsdaten aktualisiert werden kann, während sich das Fahrzeug auf dem Parkplatz (303) befindet,
- wobei das Überprüfen umfasst, ob die Verarbeitungseinrichtung eine Fehlfunktion aufweist und wenn ja, ob eine Aktualisierung der Software ausreicht, um die Fehlfunktion zu beheben, oder
- wobei das Überprüfen umfasst, ob die Verarbeitungseinrichtung eine Fehlfunktion hatte und wenn ja, ob eine Aktualisierung der Software ausreicht, um die Fehlfunktion zu beheben, oder
- wobei das Überprüfen umfasst, ob die Verarbeitungseinrichtung eine Fehlfunktion aufweist und ob die Verarbeitungseinrichtung eine Fehlfunktion hatte und wenn ja, ob eine Aktualisierung der Software ausreicht, um die Fehlfunktion zu beheben,
- wobei der Server (201) die Aktualisierungsdaten nur während eines Stillstandes des Fahrzeugs an das Fahrzeug sendet.

2. Verfahren nach Anspruch 1, wobei eine weitere Kommunikationsverbindung zwischen dem Server (201) und einem weiteren Server aufgebaut wird, wobei der Server (201) die Aktualisierungsdaten von dem weiteren Server über die weitere Kommunikationsverbindung empfängt, um die Aktualisierungsdaten über die Kommunikationsverbindung an das Fahrzeug zu senden.

3. Verfahren nach einem der vorangehenden Ansprüche, wobei, wenn die Aktualisierung der Software nicht ausreicht, um die Fehlfunktion zu beheben, zumindest eine der folgenden Aktionen mittels des Servers (201) durchgeführt wird:
- Senden einer Nachricht an einen Halter und/oder an einen Fahrer des Fahrzeugs, um diese(n) darüber zu informieren,
- Senden einer Nachricht an eine Werkstatt eines Halters und/oder eines Fahrers des Fahrzeugs, um diese darüber zu informieren,
- Blockieren und/oder Einschränken zumindest einer die Fehlfunktion betreffende Fahrfunktion des Fahrzeugs,
- Senden einer Nachricht an einen Pannenservice, um diesen mit einer Reparatur der Fehlfunktion zu beauftragen,
- Senden einer Nachricht an einen Abholservice, um diesen mit einer Abholung des Fahrzeugs zu beauftragen.

4. Verfahren nach einem der vorangehenden Ansprüche, wobei, wenn die Aktualisierung der Software ausreicht, eine Nachricht an einen Halter und/oder an einen Fahrer des Fahrzeugs mittels des Servers (201) gesendet wird, um diese(n) darüber zu informieren und/oder um von diesem respektive diesen eine Bestätigung für ein Durchführen der Aktualisierung respektive für die Beauftragung des Pannenservices respektive des Abholservices anzufordern.

5. Verfahren nach einem der vorangehenden Ansprüche, wobei die Fehlfunktion eine autonome Fahrfunktionalität, insbesondere eine autonome Parkfunktionalität, betrifft.

6. Server (201), umfassend:
- eine Kommunikationsschnittstelle (203), die ausgebildet ist, über ein Kommunikationsnetzwerk zu kommunizieren, das mittels einer Kommunikationsinfrastruktur (305) eines Parkplatzes (303) gebildet ist,
- einen Prozessor (205), der ausgebildet ist, die Kommunikationsschnittstelle (203) derart zu steuern,
- dass die Kommunikationsschnittstelle (203) eine Kommunikationsverbindung zwischen dem Server (201) und dem sich auf einem Parkplatz (303) befindenden Fahrzeug über das Kommunikationsnetzwerk aufbaut,
- so dass über die Kommunikationsverbindung überprüft werden kann, ob eine auf einer Verarbeitungseinrichtung des Fahrzeugs gespeicherte Software aktualisiert werden muss,
- wobei der Prozessor (205) ausgebildet ist, die Kommunikationsschnittstelle (203) abhängig von dem Überprüfen derart zu steuern, dass die Kommunikationsschnittstelle (203) Aktualisierungsdaten zum Aktualisieren der Software über die Kommunikationsverbindung an das Fahrzeug sendet, so dass die Software basierend auf den Aktualisierungsdaten aktualisiert werden kann, während sich das Fahrzeug auf dem Parkplatz (303) befindet,
- wobei das Überprüfen umfasst, ob die Verarbeitungseinrichtung eine Fehlfunktion aufweist und wenn ja, ob eine Aktualisierung der Software ausreicht, um die Fehlfunktion zu beheben, oder
- wobei das Überprüfen umfasst, ob die Verarbeitungseinrichtung eine Fehlfunktion hatte und wenn ja, ob eine Aktualisierung der Software ausreicht, um die Fehlfunktion zu beheben, oder
- wobei das Überprüfen umfasst, ob die Verarbeitungseinrichtung eine Fehlfunktion aufweist und ob die Verarbeitungseinrichtung eine Fehlfunktion hatte und wenn ja, ob eine Aktualisierung der Software ausreicht, um die Fehlfunktion zu beheben,
- wobei der Prozessor (205) ausgebildet ist, die Kommunikationsschnittstelle (203) derart zu steuern, dass die Kommunikationsschnittstelle (203) die Aktualisierungsdaten nur während eines Stillstandes des Fahrzeugs an das Fahrzeug sendet.

7. Parksystem (301) für Fahrzeuge, umfassend:
- einen Parkplatz (303)
- der eine Kommunikationsinfrastruktur (305) aufweist,
- die ausgebildet ist, ein Kommunikationsnetzwerk zu bilden, und
- den Server (201) nach Anspruch 6.

8. Computerprogramm, umfassend Programmcode zur Durchführung des Verfahrens nach einem der Ansprüche 1 bis 5, wenn das Computerprogramm auf einem Computer ausgeführt wird.

## Claims

1. Method for operating a server (201), comprising the following steps of:
- setting up (101) a communication connection between the server (201) and a vehicle in a parking area (303) via a communication network, wherein the communication network is formed by means of a communication infrastructure (305) of the parking area (303),
- checking (103), via the communication connection, whether software stored on a processing device of the vehicle needs to be updated,
- depending on the checking process, transmitting (105) update data for updating the software to the vehicle by means of the server (201) via the communication connection, with the result that the software can be updated on the basis of the update data while the vehicle is in the parking area (303),
- wherein the checking process comprises determining whether the processing device has a malfunction and, if so, whether an update of the software suffices to eliminate the malfunction, or
- wherein the checking process comprises determining whether the processing device had a malfunction and, if so, whether an update of the software suffices to eliminate the malfunction, or
- wherein the checking process comprises determining whether the processing device has a malfunction and whether the processing device had a malfunction and, if so, whether an update of the software suffices to eliminate the malfunction,
- wherein the server (201) transmits the update data to the vehicle only while the vehicle is at a standstill.

2. Method according to Claim 1, wherein a further communication connection is set up between the server (201) and a further server, wherein the server (201) receives the update data from the further server via the further communication connection in order to transmit the update data to the vehicle via the communication connection.

3. Method according to one of the preceding claims, wherein, if the update of the software does not suffice to eliminate the malfunction, at least one of the following actions is carried out by means of the server (201):
- transmitting a message to an owner and/or a driver of the vehicle in order to inform them of this,
- transmitting a message to a workshop of an owner and/or of a driver of the vehicle in order to inform them of this,
- blocking and/or restricting at least one driving function of the vehicle relating to the malfunction,
- transmitting a message to a breakdown service in order to instruct it to repair the malfunction,
- transmitting a message to a pick-up service in order to instruct it to pick up the vehicle.

4. Method according to one of the preceding claims, wherein, if the update of the software suffices, a message is transmitted to an owner and/or a driver of the vehicle by means of the server (201) in order to inform them of this and/or in order to request confirmation from them for carrying out the update or for instructing the breakdown service or the pick-up service.

5. Method according to one of the preceding claims, wherein the malfunction relates to an autonomous driving functionality, in particular an autonomous parking functionality.

6. Server (201) comprising:
- a communication interface (203) which is designed to communicate via a communication network which is formed by means of a communication infrastructure (305) of a parking area (303),
- a processor (205) which is designed to control the communication interface (203) in such a manner
- that the communication interface (203) sets up a communication connection between the server (201) and the vehicle in a parking area (303) via the communication network,
- with the result that the communication connection can be used to check whether software stored on a processing device of the vehicle needs to be updated,
- wherein the processor (205) is designed to control the communication interface (203) on the basis of the checking process in such a manner that the communication interface (203) transmits update data for updating the software to the vehicle via the communication connection, with the result that the software can be updated on the basis of the update data while the vehicle is in the parking area (303),
- wherein the checking process comprises determining whether the processing device has a malfunction and, if so, whether an update of the software suffices to eliminate the malfunction, or
- wherein the checking process comprises determining whether the processing device had a malfunction and, if so, whether an update of the software suffices to eliminate the malfunction, or
- wherein the checking process comprises determining whether the processing device has a malfunction and whether the processing device had a malfunction and, if so, whether an update of the software suffices to eliminate the malfunction,
- wherein the processor (205) is designed to control the communication interface (203) in such a manner that the communication interface (203) transmits update data to the vehicle only while the vehicle is at a standstill.

7. Parking system (301) for vehicles, comprising:
- a parking area (303)
- which has a communication infrastructure (305)
- which is designed to form communication network, and
- a server (201) according to Claim 6.

8. Computer program comprising program code for carrying out the method according to one of Claims 1 to 5 when the computer program is executed on a computer.

## Revendications

1. Procédé permettant de faire fonctionner un serveur (201), comprenant les étapes suivantes consistant à :
- établir (101) une liaison de communication entre le serveur (201) et un véhicule se trouvant sur une place de stationnement (303) par le biais d'un réseau de communication, le réseau de communication étant formé au moyen d'une infrastructure de communication (305) de la place de stationnement (303),
- vérifier (103), par le biais de la liaison de communication, si un logiciel stocké sur un dispositif de traitement du véhicule doit être mis à jour,
- en fonction de la vérification, envoyer (105) des données de mise à jour pour mettre à jour le logiciel par le biais de la liaison de communication au véhicule au moyen du serveur (201) de sorte que le logiciel peut être mis à jour sur la base des données de mise à jour pendant que le véhicule se trouve sur la place de stationnement (303),
- la vérification comprenant si le dispositif de traitement présente un dysfonctionnement, et si oui, si une mise à jour du logiciel suffit pour corriger le dysfonctionnement, ou
- la vérification comprenant si le dispositif de traitement a présenté un dysfonctionnement, et si oui, si une mise à jour du logiciel suffit pour corriger le dysfonctionnement, ou
- la vérification comprenant si le dispositif de traitement présente un dysfonctionnement et si le dispositif de traitement a présenté un dysfonctionnement, et si oui, si une mise à jour du logiciel suffit pour corriger le dysfonctionnement,
- le serveur (201) n'envoyant au véhicule les données de mise à jour que pendant un arrêt du véhicule.

2. Procédé selon la revendication 1, dans lequel une autre liaison de communication est établie entre le serveur (201) et un autre serveur, le serveur (201) recevant les données de mise à jour de l'autre serveur par l'autre liaison de communication pour envoyer au véhicule les données de mise à jour par le biais de la liaison de communication.

3. Procédé selon l'une quelconque des revendications précédentes, dans lequel lorsque la mise à jour du logiciel ne suffit pas pour corriger le dysfonctionnement, au moins l'une des actions suivantes est effectuée au moyen du serveur (201) :
- envoyer un message à un propriétaire et/ou à un conducteur du véhicule pour informer celui-ci/ceux-ci,
- envoyer un message à un garage d'un propriétaire et/ou d'un conducteur du véhicule pour l'informer,
- bloquer et/ou limiter au moins une fonction de conduite du véhicule concernant le dysfonctionnement,
- envoyer un message à un service de dépannage afin de le charger d'une réparation du dysfonctionnement,
- envoyer un message à un service d'enlèvement pour le charger d'un enlèvement du véhicule.

4. Procédé selon l'une quelconque des revendications précédentes, dans lequel, lorsque la mise à jour du logiciel suffit, un message est envoyé à un propriétaire et/ou à un conducteur du véhicule au moyen du serveur (201) pour informer celui-ci/ceux-ci, et/ou pour lui/leur demander une confirmation de l'exécution de la mise à jour ou pour le fait de charger le service de dépannage ou le service d'enlèvement.

5. Procédé selon l'une quelconque des revendications précédentes, dans lequel le dysfonctionnement concerne une fonctionnalité de conduite autonome, en particulier une fonctionnalité de stationnement autonome.

6. Serveur (201), comprenant :
- une interface de communication (203) qui est réalisée pour communiquer par le biais d'un réseau de communication qui est formé au moyen d'une infrastructure de communication (305) d'une place de stationnement (303),
- un processeur (205) qui est réalisé pour commander l'interface de communication (203) de telle sorte,
- que l'interface de communication (203) établit une liaison de communication entre le serveur (201) et le véhicule se trouvant sur une place de stationnement (303) par le biais du réseau de communication,
- de sorte qu'il est possible de vérifier par le biais de la liaison de communication si un logiciel stocké sur un dispositif de traitement du véhicule doit être mis à jour,
- le processeur (205) étant réalisé pour commander l'interface de communication (203) en fonction de la vérification de telle sorte que l'interface de communication (203) envoie au véhicule des données de mise à jour pour la mise à jour du logiciel par le biais de la liaison de communication de sorte que le logiciel peut être mis à jour sur la base des données de mise à jour pendant que le véhicule se trouve sur la place de stationnement (303),
- la vérification comprenant si le dispositif de traitement présente un dysfonctionnement, et si oui, si une mise à jour du logiciel suffit pour corriger le dysfonctionnement, ou
- la vérification comprenant si le dispositif de traitement a présenté un dysfonctionnement, et si oui, si une mise à jour du logiciel suffit pour corriger le dysfonctionnement, ou
- la vérification comprenant si le dispositif de traitement présente un dysfonctionnement et si le dispositif de traitement a présenté un dysfonctionnement, et si oui, si une mise à jour du logiciel suffit pour corriger le dysfonctionnement,
- le processeur (205) étant réalisé pour commander l'interface de communication (203) de telle sorte que l'interface de communication (203) n'envoie au véhicule les données de mise à jour que pendant un arrêt du véhicule.

7. Système de stationnement (301) pour des véhicules, comprenant :
- une place de stationnement (303)
- qui présente une infrastructure de communication (305)
- qui est réalisée pour former un réseau de communication, et
- le serveur (201) selon la revendication 6.

8. Programme informatique, comprenant du code programme pour exécuter le procédé selon l'une quelconque des revendications 1 à 5 lorsque le programme informatique est exécuté sur un ordinateur.
